## Europäisches Patentamt
## European Patent Office
## Office européen des brevets

(11) Numéro de publication : **0 028 950**
**B1**

# (12) FASCICULE DE BREVET EUROPÉEN

(45) Date de publication du fascicule du brevet :
23.05.84

(21) Numéro de dépôt : **80401463.7**

(22) Date de dépôt : **13.10.80**

(51) Int. Cl.³ : **F 16 H 57/06**, G 05 G 9/16

(54) Dispositif de commande manuelle de changement de vitesses à verrouillage de la marche arrière.

(30) Priorité : **07.11.79 FR 7927427**

(43) Date de publication de la demande :
**20.05.81 Bulletin 81/20**

(45) Mention de la délivrance du brevet :
**23.05.84 Bulletin 84/21**

(84) Etats contractants désignés :
**DE GB IT**

(56) Documents cités :
**DE-A- 1 919 795**
**DE-A- 2 062 642**
**FR-A- 2 074 826**
**FR-A- 2 175 435**
**GB-A-  906 846**
**US-A- 1 896 893**
**US-A- 4 143 560**

(73) Titulaire : **AUTOMOBILES PEUGEOT**
**75, avenue de la Grande Armée**
**F-75116 Paris (FR)**

**AUTOMOBILES CITROEN**
**117-167 Quai André Citroën**
**F-75747 Paris Cedex 15 (FR)**

(72) Inventeur : **Maygnan, Christian**
**Le Colombier B 24**
**La Villeneuve St. Martin F-95450 Vigny (FR)**

(74) Mandataire : **Moncheny, Michel et al**
**c/o Cabinet Lavoix 2 Place d'Estienne d'Orves**
**F-75441 Paris Cedex 09 (FR)**

EP 0 028 950 B1

Jouve, 18, rue St-Denis, 75001 Paris, France

## Description

La présente invention se rapporte à un dispositif à commande manuelle de changement de rapport de boîte de vitesses. Elle concerne plus particulièrement un dispositif de verrouillage interdisant la sélection involontaire de l'un des rapports, de préférence celui de marche arrière.

On connaît déjà des dispositifs de ce genre (FR-A-2 074 826 dans lesquels des organes de butée complémentaires sont disposés, d'une part, sur le levier de vitesses et, d'autre part, sur une partie fixe. Ces butées empêchent, normalement, de sélectionner le rapport de marche arrière, la sélection ne pouvant être réalisée que par une manœuvre volontaire qui consiste en un déplacement axial du levier de vitesses, ou d'un organe lié à ce dernier, ce qui a pour effet de désengager l'un de l'autre les organes de butée complémentaires.

On connaît par ailleurs (FR-A-2 467 442) des dispositifs de changement de vitesses comprenant un levier d'actionnement manuel agissant directement sur deux barres, l'une de sélection, l'autre de passage, les mouvements de rotation de la première et de translation de la seconde assurant respectivement la sélection du rapport choisi et son engagement. Dans ces dispositifs, la barre de sélection est habituellement portée, au voisinage de son point de liaison avec le levier de vitesses, par un palier élastique d'axe longitudinal, ce palier élastique ayant pour but de filtrer les vibrations provenant du moteur.

Sur ces dispositifs de changement de vitesses, les moyens de verrouillage du type précité n'assurent plus une sécurité suffisante. En effet, l'effort exercé sur le levier de vitesses, lorsque les deux organes de butée complémentaires sont en contact, engendre une réaction dans le palier élastique. Cette réaction peut provoquer sur ce dernier une déformation telle qu'il se produise un désengagement des organes de butée complémentaires autorisant alors la sélection involontaire du rapport de marche arrière.

Le but de cette invention est de remédier à cet inconvénient en fournissant un dispositif de verrouillage qui ne provoque pas de réaction sur le palier élastique et qui n'altère pas le rôle de filtrage des vibrations de ce palier.

L'invention concerne un dispositif de commande de changement de vitesse comprenant un levier d'actionnement manuel articulé suivant un axe transversal par rapport à une barre longitudinale de sélection de vitesses et relié par une articulation à rotule à une barre de passage de vitesses, la barre longitudinale de sélection étant portée par un palier élastique d'axe longitudinal relié à un support fixe, des moyens de verrouillage libérables par un déplacement axial d'un organe lié au levier de vitesses étant prévus pour interdire la sélection d'un rapport de vitesses.

Ce dispositif est caractérisé en ce que lesdits moyens de verrouillage comprennent un organe monté coulissant par rapport au levier de vitesses, suivant l'axe de ce dernier, et coopérant avec une butée solidaire d'un manchon monté fou sur la barre de sélection, des jeux de butées complémentaires, diamétralement opposés, étant ménagés entre ledit manchon et le corps du palier élastique.

Suivant un mode de réalisation :

— ledit organe est une tige montée coulissante dans un logement axial du levier de vitesses ;

— le manchon porte deux ergots diamétralement opposés qui s'engagent avec un léger jeu dans deux logements ménagés dans le corps du palier élastique, et diamétralement opposés par rapport à l'axe de ce palier.

Un exemple de réalisation fait l'objet de la description qui suit, en référence aux dessins joints dans lesquels :

la Figure 1 est une vue en coupe verticale longitudinale par l'axe du levier de vitesses ;

la Figure 2 est une vue en coupe suivant la ligne 2-2 de la Fig. 1 ;

les Figures 3 et 4 sont des vues en coupe suivant la ligne 3-3 de la Fig. 1, pour deux positions différentes du levier de vitesses ;

la Figure 5 est une vue en coupe suivant la ligne 5-5 de la Fig. 3.

Le dispositif représenté comporte un levier de vitesses 1, une barre de sélection 2 et une barre de passage 3. La direction de l'axe X-X de la barre 2 est définie comme étant longitudinale dans la suite de la description.

Le levier 1 est constitué principalement par un tube 4, terminé à sa partie supérieure par un pommeau 5 et fixé à sa partie inférieure sur une chape 6. Cette dernière est articulée sur un axe 7 porté par une bague 8 soudée sur la barre de sélection 2. L'une des branches de la chape 6, prolongée au-delà de la barre de sélection 2, est reliée par une articulation à rotule 9 à la barre de passage 3.

Un prolongement 10 de la barre de sélection 2, au-delà du levier de vitesses 1, est supporté au voisinage de ce levier par un palier élastique 11 d'axe longitudinal. Ce palier est constitué par un manchon en élastomère 12 emmanché dans un corps de palier 13 fixé par des boulons 14 sur le plancher 15 du véhicule.

Autour du levier de vitesses 1 est monté un fourreau coulissant 16 terminé à sa partie supérieure par une collerette de préhension 17 et portant à sa partie inférieure une goupille 18 traversant le tube 4 dans des lumières 19.

Sur la goupille 18 est fixée une tige 20 montée coulissante à l'intérieur du tube 4. La tige 20 est reliée par une tringle 21 à une tige 22 qui coulisse également dans le tube 4 et qui se termine entre les branches de la chape 6 par un patin 23 faisant saillie latéralement par rapport à la tige 22. Un ressort 24, disposé entre la tige 22 et une rondelle 25 qui s'appuie sur un épaulement intérieur 26 du tube 4, tend à repousser la tige 22 et le patin 23 en direction de la bague 8.

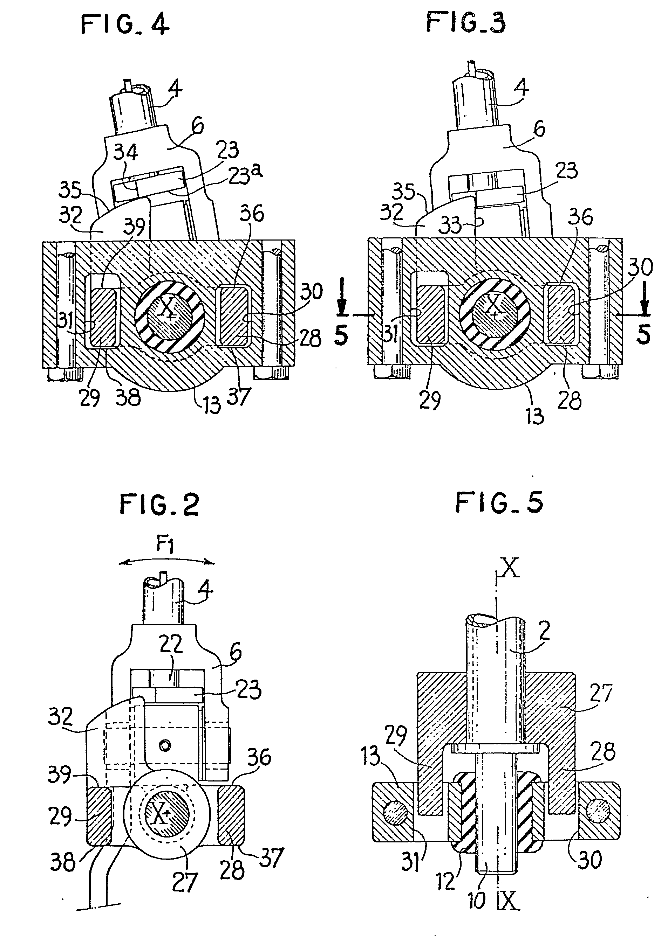

Un manchon 27 est monté, libre en rotation, autour de la barre de sélection 2. Ce manchon porte deux ergots longitudinaux 28, 29 (Fig. 2 à 5) qui s'engagent, respectivement, dans des logements 30, 31 formés dans le corps de palier 13 et diamétralement opposés par rapport à l'axe X-X. Le manchon 27 porte également une saillie 32 présentant une surface latérale 33, plane, destinée à coopérer avec un épaulement latéral 34 du patin 23, et une surface supérieure 35, courbe, sur laquelle peut s'appuyer la face inférieure 23ᵃ du patin 23, comme on le verra plus loin.

Les deux ergots 28, 29 présentent un jeu notable par rapport à leur logement 30, 31 suivant une direction radiale par rapport à l'axe de référence X-X. Suivant une direction tangentielle par rapport à ce même axe X-X, l'ergot 28 présente un jeu très faible entre ses bords 36, 37 et les faces du logement 30, tandis que l'ergot 29 présente un jeu très faible entre son bord 38 et la face correspondante du logement 31 et un jeu plus important entre son bord 39 et la face correspondante du même logement.

Le fonctionnement du dispositif qui vient d'être décrit est le suivant :

Pour réaliser l'engagement d'une vitesse, le levier 1 est d'abord déplacé transversalement, suivant la flèche F1 (Fig. 2) ce qui assure la sélection du rapport choisi, par rotation de la barre 2 autour de son axe X-X. Le levier 1 est ensuite déplacé longitudinalement, suivant la flèche F2, ce qui assure le passage de la vitesse choisie, par déplacement longitudinal de la barre 3.

Lorsque le levier 1 est placé dans la position de sélection des rapports de troisième et quatrième vitesses, le patin 23 est placé face à la saillie 32 du manchon 27, mais son épaulement 34 est éloigné de la surface 33 de cette saillie (Fig. 2).

Il est alors possible de déplacer le levier 1 dans la position de sélection des rapports de première et deuxième vitesses (Fig. 3). Ce déplacement est limité par la venue en butée de l'épaulement 34 sur la surface 33.

Si dans cette position un effort transversal important est exercé sur le levier 1, cet effort est reporté sur la saillie 32 puis retransmis aux bords 36 et 38 des ergots 28 et 29. Du fait de la disposition diamétralement opposée des ergots 28 et 29, il n'en résulte aucune réaction sur le manchon en élastomère 12 qui ne peut donc subir aucune déformation anormale, ce qui garantit la sécurité du verrouillage.

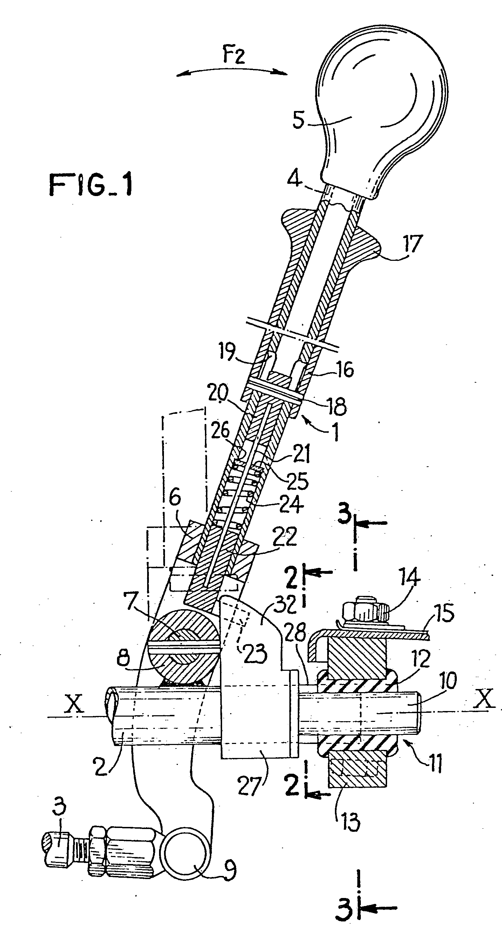

Pour pouvoir engager la marche arrière, il faut, préalablement, déplacer le fourreau 16 vers le haut. Ce mouvement, qui ne peut être que volontaire, entraîne un relèvement du patin 23 qui peut alors passer au-dessus de la surface 35 de la saillie 32 (Fig. 4 et Fig. 1 position en trait mixte).

Lorsque le levier 1 est ramené dans sa position de sélection des rapports de première et seconde vitesses, le ressort 24 ramène le patin 23 en position de verrouillage. Au cours de ce mouvement, le manchon 27 ne peut être entraîné par frottement par le patin 23, grâce à l'appui du bord 37 de l'ergot 28 dans son logement.

Il est intéressant de noter que, du fait du montage libre du manchon 27 par rapport au corps de palier 13, on ne compromet par le filtrage assuré par le manchon élastique 12.

Bien entendu un résultat équivalent est obtenu si les ergots 28, 29 sont portés par le corps du palier, les logements complémentaires étant alors prévus dans le manchon. D'autres variantes peuvent par ailleurs être envisagées sans sortir pour autant du cadre de ce brevet, notamment en ce qui concerne l'agencement relatif du patin coulissant par rapport au levier de vitesses, ou d'autres parties du dispositif. Cependant le mode de réalisation représenté est particulièrement satisfaisant par sa simplicité de réalisation, sa robustesse et le bon filtrage des vibrations qu'il procure.

**Revendications**

1. Dispositif de commande de changement de vitesses comprenant un levier (1) d'actionnement manuel articulé suivant un axe (7) transversal par rapport à une barre longitudinale (2) de sélection de vitesses et relié par une articulation à rotule (9) à une barre (3) de passage de vitesses, la barre longitudinale (2) de sélection étant portée par un palier élastique (11) d'axe longitudinal (X-X) relié à un support fixe (15), des moyens de verrouillage libérables par un déplacement axial d'un organe (20, 22) lié au levier de vitesses (1) étant prévus pour interdire la sélection d'un rapport de vitesses, caractérisé en ce que lesdits moyens de verrouillage comprennent un organe (20, 22) monté coulissant par rapport au levier de vitesses suivant l'axe de ce dernier, et coopérant avec une butée (33) solidaire d'un manchon (27) monté fou sur la barre de sélection (2), des jeux de butées complémentaires, diamétralement opposés, étant ménagés entre ledit manchon (27) et le corps (13) du palier élastique (11).

2. Dispositif suivant la revendication 1, caractérisé en ce que ledit organe est une tige (20, 22) montée coulissante dans un logement axial du levier (4) de vitesse.

3. Dispositif suivant la revendication 2, caractérisé en ce que la tige (20, 22) est reliée par une goupille transversale (18) s'étendant dans des lumières (19) du levier de vitesses (1) à un fourreau (16, 17) monté coulissant le long de la surface externe du levier de vitesses.

4. Dispositif suivant la revendication 3, caractérisé en ce que le fourreau (16) porte une collerette de préhension (17).

5. Dispositif suivant l'une quelconque des revendications 1 à 4, caractérisé en ce que ledit organe (20, 22) est sollicité par un ressort (24) vers sa position pour laquelle il peut venir en contact avec la butée (33) solidaire du manchon (27).

6. Dispositif suivant la revendication 2, caractérisé en ce que la tige (20, 22) fait saillie à son extrémité inférieure dans une chape (6) solidaire du levier de vitesses et elle porte à cette même extrémité un doigt ou patin (23), en saillie latéralement et qui coopère avec la butée (33) solidaire du manchon (27).

7. Dispositif suivant la revendication 6, caractérisé en ce que le manchon (27) porte une saillie (32) qui délimite, d'une part, une surface latérale de butée (33) coopérant avec un épaulement latéral (34) du patin (23) et, d'autre part, une surface incurvée supérieure (35) qui coopère avec la face inférieure (23ᵃ) du patin.

8. Dispositif suivant la revendication 1, caractérisé en ce que le manchon (27) porte deux ergots (28, 29) diamétralement opposés qui s'engagent avec un léger jeu dans deux logements (30, 31) ménagés dans le corps (13) du palier élastique, et diamétralement opposés par rapport à l'axe de ce palier.

**Claims**

1. Change-gear control device comprising a manually actuated lever (1) mounted to be pivotable about a pin (7) which is transverse relative to a longitudinal speed-selecting bar (2) and connected by a ball joint (9) to a speed-changing bar (3), the longitudinal selecting bar (2) being carried by a resilient bearing (11) having a longitudinal axis (X-X) and connected to a fixed support (15), locking means releasable by an axial displacement of a structure (20, 22) connected to the lever (1) being provided for preventing the selection of a speed ratio, characterised in that said locking means comprise a structure (20, 22) mounted to be slidable relative to the lever along the axis of the latter and cooperating with an abutment (33) rigid with a sleeve (27) freely mounted on the selecting bar (2), sets of complementary diametrically opposed abutments being provided between said sleeve (27) and the body (13) of the resilient bearing (11).

2. A device according to claim 1, characterised in that said structure is a rod (20, 22) slidably mounted in an axial cavity of the lever (4).

3. A device according to claim 2, characterised in that the rod (20, 22) is connected, by a transverse pin (18) which extends through orifices (19) in the lever (1), to a sleeve (16, 17) mounted to slide along the outer surface of the lever.

4. A device according to claim 2, characterised in that the sleeve (16) carries a handling collar (17).

5. A device according to any one of the claims 1-4, characterised in that said structure (20, 22) is biased by a spring (24) toward its position in which it can come into contact with the abutment (33) rigid with the sleeve (27).

6. A device according to claim 2, characterised in that the rod (20, 22) projects at its lower end into a fork (6) rigid with the lever and it carries at this same end a finger or shoe member (23) which projects laterally and cooperates with the abutment (33) rigid with the sleeve (27).

7. A device according to claim 6, characterised in that the sleeve (27) carries a projection (32) which defines, on one hand, a lateral abutment surface (33) cooperating with a lateral shoulder (34) of the shoe member (23) and, on the other hand, an upper curved surface (35) which cooperates with the lower surface (23a) of the shoe member.

8. A device according to claim 1, characterised in that the sleeve (27) carries two diametrically opposed lugs (28, 29) which engage with a slight clearance in two cavities (30, 31) formed in the body (13) of the resilient bearing and diametrically opposed relative to the axis of this bearing.

**Ansprüche**

1. Steuerungsvorrichtung für die Änderung der Gänge, mit einem von Hand zu betätigenden Hebel (1), der um eine quer zu einer Gangwahl-Längsstange (2) verlaufende Achse (7) schwenkbar angeordnet und durch ein Kugelgelenk (9) mit einer Gangübertragungsstange (3) verbunden ist, wobei die Gangwahl-Längsstange (2) in einem elastischen Lager (11) mit Längsachse (X-X) gelagert ist, das an einer starren Halterung (15) befestigt ist, und mit Verriegelungseinrichtungen, die durch axiale Verlagerung eines mit dem Ganghebel (1) verbundenen Bauteil (20, 22) freigebbar sind und zur Verhinderung einer Gangwahl dienen, dadurch gekennzeichnet, daß die Verriegelungseinrichtungen ein gegenüber dem Ganghebel bewegliches, der Achse des letzteren folgend angebrachtes Bauteil (20, 22) aufweisen und mit einem Anschlag (33) zusammenwirken, der mit einer beweglich auf der Wahlstange (2) angebrachten Muffe (27) verbunden ist, und daß diametral gegenüberliegende Sätze von komplementären Anschlägen vorgesehen sind, die zwischen der Muffe (27) und dem Körper (13) des elastischen Lagers (11) liegen.

2. Vorrichtung nach Anspruch 1, dadurch gekennzeichnet, daß das erwähnte Bauteil ein in einem axialen Gehäuse des Schalthebels (4) verschiebbar montierter Stift (20, 22) ist.

3. Vorrichtung nach Anspruch 2, dadurch gekennzeichnet, daß der Stift (20, 22) mittels eines querverlaufenden Vorsteckstifts (18), der sich in Schlitzöffnungen (19) des Ganghebels (1) erstreckt, mit einer Hülse (16, 17) verbunden ist, die auf der Außenfläche des Schalthebels verschiebbar montiert ist.

4. Vorrichtung nach Anspruch 3, dadurch gekennzeichnet, daß die Hülse (16) einen Greifkragen (17) trägt.

5. Vorrichtung nach einem der Ansprüche 1 bis 4, dadurch gekennzeichnet, daß das Bauteil (20, 22) von einer Feder (24) in Richtung seiner Position vorgespannt ist, in der es mit dem zu der Muffe (27) gehörenden Anschlag (33) in Kontakt kommen kann.

6. Vorrichtung nach Anspruch 2, dadurch gekennzeichnet, daß der Stift (20, 22) mit seinem unteren Ende in einen Gabelkopf (6) ragt, der mit dem Schalthebel verbunden ist, und der an diesem selben Ende einen seitlich vorspringenden Finger oder einen Schuh (23) trägt und der mit dem einen Teil der Muffe (27) bildenden Anschlag (33) zusammenwirkt.

7. Vorrichtung nach Anspruch 6, dadurch gekennzeichnet, daß die Muffe (27) einen Vorsprung (32) trägt, der einerseits eine mit der seitlichen Schulter (34) des Schuhs (23) zusammenwirkende Seitenfläche des Anschlags (33) und andererseits eine höhere, gekrümmte Fläche (35) begrenzt, die mit der unteren Fläche (23a) des Schuhs zusammenwirkt.

8. Vorrichtung nach Anspruch 1, dadurch gekennzeichnet, daß die Muffe (27) zwei diametral gegenüberliegende Fortsätze (28, 29) trägt, die mit leichtem Spiel in zwei im Körper (13) des elastischen Lagers ausgesparte Kammern (30, 31) greifen und die sich im Verhältnis zur Achse dieses Lagers diametral gegenüberliegen.

FIG_1

FIG. 4

FIG. 3

FIG. 2

FIG. 5